# EUROPÄISCHE PATENTSCHRIFT

(11) **EP 0 778 355 B1**
(45) Veröffentlichungstag und Bekanntmachung des Hinweises auf die Patenterteilung: **10.05.2000**
(21) Anmeldenummer: 96117272.3
(22) Anmeldetag: 28.10.1996
(51) Int. Cl.: C22C 37/06, C22C 37/00

(54) **Optimierte Lamellen-Graugusslegierung für Bremsscheiben von Nutzfahrzeug**
Optimized composition of lamellar graphite gray cast iron for brake disks of utility vehicles
Composition optimalisée de moulages en fonte grise lamellaire pour disques de freinage de véhicules utilitaires

(30) Priorität: 07.12.1995 DE 19545611
(43) Veröffentlichungstag der Anmeldung: 11.06.1997
(73) Patentinhaber: DaimlerChrysler AG, 70567 Stuttgart (DE)
(72) Erfinder: Porkert, Joachim, 73230 Kirchheim (DE); Lotz, Wolfgang, Dr., 70734 Fellbach (DE)

(56) Entgegenhaltungen:
- EP-A- 0 080 590
- EP-A- 0 279 300
- WO-A-94/10354
- FR-A- 2 274 703
- PATENT ABSTRACTS OF JAPAN vol. 1, no. 123 (C-344), 8.Mai 1986 & JP 60 248864 A (KUSAKA REAMETARU KENKYUSHO K.K.), 9.Dezember 1985,
- PATENT ABSTRACTS OF JAPAN vol. 14, no. 377 (C-748), 15.August 1990 & JP 02 138438 A (NISSAN MOTOR CO.LTD.), 28.Mai 1990,

## Beschreibung

Die Erfindung betrifft eine Lamellen-Graugußlegierung für Bremsscheiben.

Bei Personenkraftwagen (Pkw) sind heute teilbeaufschlagte Scheibenbremsen mit Bremsscheiben aus Grauguß zumindest an den Vorderrädern allgemein üblich. Die hierfür eingesetzten Graugußlegierungen sind im Hinblick auf Komfort-Gesichtspunkte, z.B. Quietsch- und Rubbelfreiheit optimiert, weil diese Aspekte im Pkw-Bereich dominieren. Die Lebensdauererwartungen der Bremsscheiben werden durch die eingesetzten Legierungen in diesem Anwendungsbereich ohne weiteres erfüllt.

Im Bereich der gegenüber Personenkraftwagen um ein vielfaches schwereren Nutzfahrzeuge (Nfz), insbesondere bei Fernlastwagen oder Baustellenfahrzeugen, sind die Lebensdauererwartungen jedoch wesentlich höher als im Pkw-Bereich. Hier wird eine Lebensdauer im Bereich von mehreren Hunderttausend Kilometern für eine Bremstrommel vor einer erforderlich werdenden Erneuerung erwartet. Die Betriebsbremsen der Nutzfahrzeuge sind daher in aller Regel als Trommelbremsen mit einem im Vergleich zu Scheibenbremsen wesentlich geringeren spezifischen Beanspruchungsniveau ausgebildet. Da Scheibenbremsen verschiedene Vorteile gegenüber Trommelbremsen bieten, werden Scheibenbremsen neuerdings auch im Nutzfahrzeugbau eingeführt. Würde man die Legierung der ebenfalls aus Grauguß bestehenden Nfz-Bremstrommeln verwenden wollen, um daraus Bremsscheiben für Nfz-Scheibenbremsen gießen zu wollen, so könnte man damit aufgrund des höheren Beanspruchungsniveaus die für Bremsscheiben bestehenden Lebensdauererwartungen nicht erfüllen. Außerdem würde aufgrund der wesentlich höheren thermischen Beanspruchung von Bremsscheiben gegenüber Bremstrommeln sich bei einem Einsatz der Trommel-Legierung für Bremsscheiben auch relativ früh sog. Brandrisse einstellen. Brandrisse sind radial in der Bremsfläche verlaufende, durch wiederholte hohe Temperaturbeanspruchung und anschließende Abkühlung initiierte Risse, die zunächst, d.h. bei geringer Anzahl und/oder Ausdehnung der Risse noch harmlos sind. Mit anhaltender Beanspruchung nehmen die Brandrisse zahlenmäßig zu, bestehende Brandrisse verbinden sich mit anderen und dehnen sich radial aus; so erreichen sie irgend wann den äußeren Scheibenrand. Würde man nicht spätestes dann die Bremsscheibe erneuern, würde die Gefahr eines Oberflächen Ausbruches aus der Bremsfläche oder gar des kompletten Scheibenbruches bestehen.

Aufgabe der Erfindung ist es, eine im Hinblick auf höhere Standzeiten und reduzierte Brandrißbildung optimierte Lamellen-Graugußlegierung für Bremsscheiben anzugeben.

Diese Aufgabe wird erfindungsgemäß durch die Gesamtheit der Merkmale von Anspruch 1 gelöst.

Bei der erfindungsgemäßen Graugußlegierung handelt es sich um einen hochgekohlen übereutektischen Eisenbasiswerkstoff. Ohne die anderen Legierungspartner, insbesonder Niob würde sich bei den hohen Kohlenstoff- und Siliziumgehalten ein weiches Grundgefüge mit einer unzureichenden Festigkeit und Härte ergeben. Jedoch ist der hohe Kohlenstoff- und Siliziumgehalt ursächlich für eine gute Wärmeleitfähigkeit des Gußwerkstoffes, die ihrerseits wiederum ursächlich für die Reduzierung der Brandrißentstehung ist. Hervorzuheben ist, daß der relativ hohe Kohlenstoffgehalt u.a. mit einem bestimmten, mäßigen Niobgehalt gepaart ist. Dadurch entsteht trotz des hohen Kohlenstoff- und Siliziumgehaltes ein vollständiges und vor allem feinlamellares, perlitisches Grundgefüge. Letzteres ist wesentlich für die hohe Zugfestigkeit und Härte. Je nach Wandstärke der Bremsscheibe - bei geringeren Wanddicken weniger, bei größeren Wanddicken mehr - soll der Siliziumgehalt so eingestellt werden, daß sich eine Brinellhärte von etwa 150 bis 190 HB ergibt und daß die Zugfestigkeit im Bereich von 15 bis 18 N/mm² liegt. In dem feinperlitischen Grundgefüge sind die Niob-Karbide gleichmäßig verteilt eingelagert, die den Verschleiß beim Bremsvorgang vermindern. Gleichwohl ergibt sich eine ausreichend gute Bearbeitbarkeit der im Grundgefüge feinperlitischen Gußlegierung. Die im Anspruch erwähnten Legierungspartner bzw. -gehalte bewirken im Zusammengehen miteinander eine gegenüber herkömmlichen Bremsscheiben-Legierungen in Lamellengrauguß höhere Zugfestigkeit, eine erhöhte Verschleißbeständigkeit und eine ebenfalls erhöhte Brandrißbeständigkeit.

Für den Einsatz als Bremsscheibe ist es wichtig, daß der in dem Gußgefüge eingelagerte Graphitkohlenstoff darin in Lamellenform abgeschieden ist, weil der in Lamellenform eingelagerte Graphit für die tribologische Beanspruchung der Bremsscheibe wesentlich günstiger ist als es ein in Kugelform abgeschiedener Grahpit wäre. Ein sphärolitischer Grauguß wäre also - übrigens auch wegen erhöhter Brandrißgefahr - für eine Bremsscheibe nicht geeignet, obwohl diese Graugußart höhere Zugfestigkeit und - zumindest in bainitisiertem Zustand - auch eine hohe Verschleißfestigkeit im Vergleich mit Lamellen-Grauguß hat. Veröffentlichungen über Legierungen von sphärolitischem Grauguß bieten daher für den vorliegenden Einsatzfall und die Standzeitproblematik dem Fachmann ebenso wenig Anregungen oder Hilfe für eine Problemlösung wie Veröffentlichungen über Legierungen von Pkw-Bremsscheiben-Legierungen oder von Trommelbrems-Legierungen.

Nachfolgend sei zu Erläuterung der Erfindung von einem ausgeführten Beispiel berichtet. Es wurde eine innenbelüftete Bremsscheibe in Hutform zum Einbau in ein Nutzfahrzeug mit 40 Tonnen zulässigem Gesamtgewicht gegossen. Der von Kreislaufmaterial befreite Scheiben-Rohling wog etwa 42 kg. Der Außendurchmesser des Scheibenrohlings betrug etwa 450 mm. Die Einzelwände im Scheibenbereich waren beim Gußrohling etwa 20 mm dick; die Gesamt stärke im Scheibenbereich war beim Gußrohling etwa 55 mm. Die verwendete Legierung enthielt außer Eisen sowie Spuren von nicht angegeben Legierungsmetallen und erschmelzungsbedingte Verunreinigungen wie Phosphor oder Schwefel - in Gewichtsprozent:

| | |
|---|---|
| Kohlenstoff | 3,85%, |
| Chrom | o,30%, |
| Silizium | 2,00%, |
| Mangan | 0,75%, |
| Kupfer | 0,40%, |
| Vanadium | 0,050% |
| Niob | 0,38%. |

Die Legierung wurde in einem Elektroofen als Versuchsofen erschmolzen. Ergänzend sei jedoch gleich erwähnt, daß aufgrund der bisher gewonnenen Erfahrungen ein Legieren in der Gießpfanne möglich ist; somit kann auch mit anderen Öfen gearbeitet werden. Nach der Niob-Zugabe in den Elektroofen wurde dieser etwa 25 Minuten lang bei erhöhter Temperatur (1550°C) betrieben und dadurch das Niob in Lösung gebracht. An Impfmittel wurden 0,2 % Sb5 sowie 0,5 kg Impfkohle in Granulatform zugegeben. Die Zugfestigkeit der mit der angegebenen Legierung abgegossenen Probekörper lag bei 17 N/mm². Kurzzeit-Verschleißversuche auf dem Bemsenprüfstand mit aus der angegebenen Legierung hergestellten Bremsscheiben haben ergeben, daß die Bremsscheibe mindestens eine achtfache Lebensdauer gegenüber den Belägen der Bremsklötze erwarten läßt.

## Patentansprüche

1. Legierung für Lamellen-Grauguß zum Gießen von Rohlingen von Bremsscheiben, mit folgender Zusammensetzung - Angaben in Gewichtsprozent:
| | | |
|---|---|---|
| Kohlenstoff | 3,65 bis 3,95%, | vorzugsweise etwa 3,85%, |
| Chrom | 0,20 bis 0,40%, | vorzugsweise etwa o,30%, |
| Silizium | 1,80 bis 2,20%, | |
| Mangan | 0,60 bis 0,80%, | |
| Kupfer | 0,30 bis 0,50%, | |
| Niob | 0,20 bis 0,80%, | vorzugsweise etwa 0,38 bis 0,45%, |
sowie Spuren anderer Gußlegierungsmetalle wie Vanadium, Nickel, Zinn, Molybdän, Antimon die jeweils mit einem Gehalt von 0,01 bis 0,06 Gew.-% enthalten sein dürfen, wobei der Gesamtgehalt dieser zusätzlichen Legierungsmetalle zusammen nicht höher als etwa 0,3 Gew.-% liegen darf, Rest Eisen und erschmelzungsbedingte Verunreinigungen wie Phosphor oder Schwefel.

2. Verwendung der Legierung nach Anspruch 1 zum Gießen von Rohlingen von Bremsscheiben von Nutzfahrzeugen.

## Claims

1. An alloy for lamellar grey iron for casting blanks for brake discs with the following composition - figures are percentages by weight:
| | | |
|---|---|---|
| carbon | 3.65 to 3.95%, | preferably approx. 3.85%, |
| chromium | 0.20 to 0.40%, | preferably approx. 0.30%, |
| silicon | 1.80 to 2.20%, | |
| manganese | 0.60 to 0.80%, | |
| copper | 0.30 to 0.50%, | |
| niobium | 0.20 to 0.80%, | preferably approx. 0.38 to 0.45% |
and traces of other casting alloy metals such as vanadium, nickel, zinc, molybdenum and antimony, each with a permissible content of 0.01 to 0.06% by weight, with the permitted total content of these additional alloy metals together not exceeding 0.3%, the remainder being iron and impurities from the iron production process such as phosphorus or sulphur.

2. The use of the alloy described in Claim 1 for the casting of blanks for brake discs for utility vehicles.

## Revendications

1. Alliage de fonte grise lamellaire pour le moulage d'ébauches de disques de freins, ayant la composition suivante - les données étant en pourcentage en poids :
| | | |
|---|---|---|
| Carbone | de 3,65 à 3,95%, | de préférence environ 3,85%, |
| Chrome | de 0,20 à 0,40%, | de préférence environ 0,30%, |
| Silicium | de 1,80 à 2,20%, | |
| Manganèse | de 0,60 à 0,80%, | |
| Cuivre | de 0,30 à 0,50%, | |
| Niobium | de 0,20 à 0,80%, | de préférence d'environ 0,38 à 0,45%, |
ainsi que des traces d'autres métaux d'alliage de fonte comme le vanadium, le nickel, l'étain, le molybdène, l'antimoine, qui peuvent être inclus à, respectivement, une teneur de 0,01 à 0,06% en poids, le titre total de ces métaux d'alliage additionnels tous confondus ne devant pas être situé au-dessus d'environ 0,3% en poids, le solde est du fer et des impuretés dues à l'élaboration de l'acier comme le phosphore ou le soufre.

2. Utilisation de l'alliage selon la revendication 1 pour le moulage d'ébauches de disques de freins de véhicules utilitaires.
